(19) Europäisches Patentamt
European Patent Office
Office européen des brevets

(11) EP 4 633 066 A1

(12) **EUROPEAN PATENT APPLICATION**
published in accordance with Art. 153(4) EPC

(43) Date of publication:
15.10.2025  Bulletin 2025/42

(51) International Patent Classification (IPC):
*H04B 17/309* (2015.01)

(21) Application number: 23910252.8

(22) Date of filing: 19.12.2023

(52) Cooperative Patent Classification (CPC):
H04B 17/309; H04B 17/382; H04L 5/00;
H04W 24/08; H04W 24/10; H04W 72/044

(86) International application number:
PCT/CN2023/139784

(87) International publication number:
WO 2024/140322 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.12.2022  CN 202211722785

(71) Applicant: Huawei Technologies Co., Ltd.
Shenzhen, Guangdong 518129 (CN)

(72) Inventors:
• ZHANG, Yi
Shenzhen, Guangdong 518129 (CN)
• SU, Hongjia
Shenzhen, Guangdong 518129 (CN)
• LU, Lei
Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) **BEAM MEASUREMENT METHOD AND APPARATUS, AND SYSTEM**

(57)    This application provides a beam measurement method, an apparatus, and a system, which are applicable to an FR2 sidelink communication system. The beam measurement method includes: determining a channel occupancy ratio and a channel busy ratio of each of N beams, where N is a positive integer greater than or equal to 1; determining a first beam from the N beams based on the channel occupancy ratio and the channel busy ratio of each beam; and sending first sidelink information by using the first beam. In the method, channel measurement is performed on each beam, to determine the channel occupancy ratio and the channel busy ratio of each beam and further select a beam used for information transmission. Channel statuses of beams in different directions can be distinguished, thereby improving channel measurement accuracy. In addition, transmission tasks may be properly allocated based on channel conditions of the beams, thereby further improving communication reliability.

S501: A terminal device #A determines a channel occupancy ratio and a channel busy ratio of each of N beams

S502: The terminal device #A determines a first beam from the N beams based on the channel busy ratio and the channel occupancy ratio of each beam

S503: The terminal device #A sends sidelink information by using the first beam

FIG. 5

EP 4 633 066 A1

## Description

This application claims priority to Chinese Patent Application No. 202211722785.4, filed with the China National Intellectual Property Administration on December 30, 2022 and entitled "BEAM MEASUREMENT METHOD, APPARATUS, AND SYSTEM", which is incorporated herein by reference in its entirety.

## TECHNICAL FIELD

This application relates to the communication field, and in particular, to a beam measurement method, an apparatus, and a system.

## BACKGROUND

In a communication process, to improve communication quality, a channel status needs to be measured for congestion control. For example, in a sidelink (sidelink, SL) distributed system of an FR1 frequency band, congestion control is performed based on a channel busy status of each user equipment (user equipment, UE), to avoid system congestion. However, in an FR2 frequency band, due to beam directivity, channel congestion degrees in different directions may be different. Therefore, how to adjust channel congestion of a beam in the FR2 frequency band is an urgent problem to be resolved.

## SUMMARY

This application provides a beam measurement method, an apparatus, and a system. The measurement method can improve measurement accuracy, thereby improving communication quality.

According to a first aspect, a beam measurement method is provided. The method may be performed by a terminal device, or may be performed by a chip or a circuit used in the terminal device. This is not limited in this application. For ease of description, an example in which the method is performed by a terminal device is used below for description.

The method may include: determining a channel occupancy ratio and a channel busy ratio of each of N beams, where N is a positive integer greater than or equal to 1; determining a first beam from the N beams based on the channel occupancy ratio and the channel busy ratio of each beam; and sending first sidelink information by using the first beam.

The N beams may be beams belonging to FR2.

In the method, channel measurement is performed on each beam, to determine the channel occupancy ratio and the channel busy ratio of each beam and further select a beam used for information transmission. According to the method, channel statuses of beams in different directions can be distinguished, so that transmission tasks are properly allocated based on channel conditions of the beams, thereby improving channel measurement accuracy and further improving communication reliability.

With reference to the first aspect, in some implementations of the first aspect, the channel occupancy ratio indicates a channel occupation status within a first time period, the channel busy ratio indicates a channel busy status within a second time period, and the second beam belongs to the N beams.

With reference to the first aspect, in some implementations of the first aspect, the channel occupancy ratio meets the following relationship:

$$CR_{\mathrm{j}} = \frac{CH_j}{CH_{total,j}},$$

where
j=1, ..., N, $CR_j$ represents a channel occupancy ratio of a beam j within a first time period, $CH_{total,j}$ represents a total quantity of subchannels of the beam j within the first time period, and $CH_j$ represents a sum of a quantity of subchannels that have been transmitted and a quantity of subchannels that are to be transmitted in the beam j within the first time period.

With reference to the first aspect, in some implementations of the first aspect, the channel busy ratio meets the following relationship:

$$\mathrm{CBR}_j = \frac{Q}{\mathrm{CH}_{\mathrm{total}}},$$

where
j=1, ..., N, $CBR_j$ represents a channel busy ratio of the beam j within a second time period, Q represents a quantity of subchannels greater than or equal to an RSSI threshold in the beam j within the second time period, and $CH_{total}$ represents a total quantity of subchannels or a total quantity of measured subchannels of the beam j within the second time period.

The first time period and the second time period may be a same time period or different time periods in time domain. This is not limited in this application.

With reference to the first aspect, in some implementations of the first aspect, determining the first beam from the N beams based on the channel occupancy ratio and the channel busy ratio includes:

determining the first beam from the N beams based on a first condition, where the first condition is:

$$\sum_{i \geq k} \mathrm{CR}_j(\mathrm{i}) \leq \mathrm{CR}_{\mathrm{Limit},j}(\mathrm{k}),$$

where

j=1, ..., N, $CR_j(i)$ is a channel occupancy ratio of the beam j for transmitting information on a PSSCH of a priority i within the first time period, $CR_{Limit,j}(k)$ is a channel occupancy ratio threshold of the beam j, the channel occupancy ratio threshold is associated with a priority k and a channel busy ratio, and the first beam meets the first condition.

In other words, only a beam that meets the first condition can be used as a candidate of the first beam.

In this manner, a beam may be used for information transmission only when a CR of the beam meets the first condition, that is, when a channel usage status (or a channel status or a channel condition) of the beam meets a channel constraint. This further improves communication reliability.

With reference to the first aspect, in some implementations of the first aspect, determining the first beam from the N beams based on the channel occupancy ratio and the channel busy ratio of each beam includes: determining S beams from the N beams based on the channel occupancy ratio and the channel busy ratio of each beam, where S is a positive integer less than or equal to N, and the S beams meet the first condition; and determining the first beam from the S beams based on a reference signal received power RSRP of each beam, where the first beam is a beam with a largest RSRP in the S beams.

In other words, a beam with a largest RSRP is selected from beams that meet the first condition as the first beam to transmit information.

In this manner, a possible manner of selecting the first beam is provided, and a beam with a largest RSRP is selected to transmit information, so that communication reliability can be further improved.

With reference to the first aspect, in some implementations of the first aspect, determining the first beam from the N beams based on the channel occupancy ratio and the channel busy ratio of each beam includes: determining L beams from the N beams based on the channel occupancy ratio and the channel busy ratio of each beam, where L is a positive integer less than or equal to N, and the L beams meet the first condition; and determining the first beam from the L beams based on the channel occupancy ratio and the channel busy ratio of each beam, where the first beam is a beam with smallest $\Sigma_{i \geq k} CR_j(i)$ in the L beams.

In other words, a beam with smallest $\Sigma_{i \geq k} CR_j(i)$ is selected from beams that meet the first condition as the first beam to transmit information. In other words, a beam with highest idleness is selected to transmit information.

In this manner, another manner of selecting the first beam is provided, that is, a beam with smallest $\Sigma_{i \geq k} CR_j(i)$ is selected to transmit information, so that an information capacity requirement can be met as much as possible, and communication reliability is further improved.

With reference to the first aspect, in some implementations of the first aspect, before the first sidelink information is sent by using the first beam, the method further includes: determining to-be-sent information, where the to-be-sent information includes the first sidelink information and second sidelink information; and when the first beam is used to send the first sidelink information and the second sidelink information, and the first beam does not meet the first condition, determining a second beam, where the second beam meets the first condition, and the second beam belongs to the N beams.

The method further includes:

sending the second sidelink information by using the second beam.

In other words, when the first beam is used to transmit all to-be-sent information, the first beam may not meet the first condition. In this case, the first beam may be used to send a part of the to-be-sent information, and then one second beam is determined to send the remaining part of the to-be-sent information. The second beam needs to meet the first condition. In addition, when the first beam and the second beam separately send a part of the to-be-sent information, both the first beam and the second beam meet the first condition.

In other words, when the first beam cannot meet a requirement of the to-be-sent information, another beam may be selected for joint communication.

In this manner, a plurality of beams jointly undertake a communication task, so that a communication requirement can be met in time, for example, requirements for communication reliability and a communication delay can be met, thereby improving communication quality.

With reference to the first aspect, in some implementations of the first aspect, the first sidelink information is initial transmission information, and the second sidelink information is retransmission information.

With reference to the first aspect, in some implementations of the first aspect, determining the channel occupancy ratio and the channel busy ratio of each of N beams includes: receiving a first parameter, where the first parameter is from a second terminal device, the first parameter indicates a resource occupation status of a third beam, the first parameter is obtained by the second terminal device through measurement by using the third beam, the second terminal device is a receive end of a first terminal device, and the third beam is a receive beam corresponding to a fourth beam; and determining a channel occupancy ratio and a channel busy ratio of the fourth beam based on the first parameter.

In this manner, the first terminal device may determine a channel status of a transmit beam based on a measurement result of the receive end. It should be understood that the channel status obtained by the receive end through measurement is closest to an actual beam usage status. This further improves beam measurement accuracy.

With reference to the first aspect, in some implementations of the first aspect, determining the channel occupancy ratio and the channel busy ratio of the fourth beam based on the first parameter includes: determining the channel occupancy ratio and the channel busy ratio of the fourth beam based on the first parameter and a second parameter, where the second parameter indicates a resource occupation status of the fourth beam, and the second parameter is obtained by the first terminal device through measurement by using the fourth beam.

In this manner, based on a resource occupation status of a beam that is obtained by the first terminal device through measurement and a resource occupation status of the beam that is obtained by the receive end through measurement, the first terminal device may jointly determine a channel occupancy ratio and a channel busy ratio of the beam. This further improves beam measurement accuracy.

With reference to the first aspect, in some implementations of the first aspect, determining the channel occupancy ratio and the channel busy ratio of each of N beams includes:

when at least two of the N beams meet at least one of the following, the at least two beams have a same channel occupancy ratio and a same channel busy ratio:

RSRPs respectively corresponding to the at least two beams are greater than or equal to a first threshold;

or

the at least two beams belong to a same antenna panel;

or

an included angle between maximum radiation directions of main lobes of the at least two beams is less than or equal to a second threshold.

In this manner, when different beams meet at least one of the foregoing, these beams have a same channel occupancy ratio and a same channel busy ratio, which may be calculated together. This reduces complexity of determining channel occupancy ratios and channel busy ratios of a plurality of beams by the terminal device, and reduces overheads.

With reference to the first aspect, in some implementations of the first aspect, the N beams are determined based on RSRPs respectively corresponding to M beams, where RSRPs respectively corresponding to the N beams are greater than or equal to a third threshold, and M is a positive integer greater than or equal to N.

The third threshold may be predefined, or may be configured. This is not limited in embodiments of this application.

In other words, the RSRP of each of the N beams meets an RSRP threshold requirement. In other words, only when an RSRP of a beam meets the RSRP threshold, the beam can be used as a candidate of the first beam.

In this manner, a beam that meets the RSRP threshold is used as a candidate of the first beam, so that quality of the first beam can be improved, and communication quality can be further improved.

According to a second aspect, a beam measurement method is provided. The method may be performed by a terminal device, or may be performed by a chip or a circuit used in the terminal device. This is not limited in this application. For ease of description, an example in which the method is performed by a terminal device is used below for description.

A first parameter is determined, where the first parameter indicates a resource occupation status of a third beam, the first parameter is obtained by a second terminal device by measuring the third beam, the second terminal device is a receive end of a first terminal device, the third beam is a receive beam corresponding to a fourth beam, and the fourth beam is a transmit beam of the first terminal device.

According to a third aspect, a communication apparatus is provided. The communication apparatus includes a processing unit and a transceiver unit. The processing unit is configured to determine a channel occupancy ratio and a channel busy ratio of each of N beams, where N is a positive integer greater than or equal to 1. The processing unit is further configured to determine a first beam from the N beams based on the channel occupancy ratio and the channel busy ratio of each beam. The transceiver unit is further configured to send first sidelink information by using the first beam.

With reference to the third aspect, in some implementations of the third aspect, the channel occupancy ratio meets the following relationship:

$$CR_j = \frac{CH_j}{CH_{total,j}},$$

where

$j=1, ..., N$, $CR_j$ represents a channel occupancy ratio of a beam j within a first time period, $CH_{total,j}$ represents a total quantity of subchannels of the beam j within the first time period, and $CH_j$ represents a sum of a quantity of subchannels that have been transmitted and a quantity of subchannels that are to be transmitted in the beam j within the first time period.

With reference to the third aspect, in some implementations of the third aspect, the channel busy ratio meets the following relationship:

$$CBR_j = \frac{Q}{CH_{total}},$$

where

$j=1, ..., N$, $CBR_j$ represents a channel busy ratio of the beam j within a second time period, Q represents a quantity of subchannels greater than or equal to an RSSI threshold in the beam j within the second time period, and $CH_{total}$ represents a total quantity of subchannels or a total quantity of measured subchannels of the beam j within the second time period.

With reference to the third aspect, in some implementations of the third aspect, that the processing unit is configured to determine a first beam from the N beams based on the channel occupancy ratio and the channel busy ratio includes:

The processing unit determines the first beam from the N beams based on a first condition, where the first condition is:

$$\sum_{i \geq k} CR_j(i) \leq CR_{Limit,j}(k),$$

where

$j=1, ..., N$, $CR_j(i)$ is a channel occupancy ratio of the beam j for transmitting information on a PSSCH of a priority i within the first time period, $CR_{Limit,j}(k)$ is a channel occupancy ratio threshold of the beam j, the channel occupancy ratio threshold is associated with a priority k and a channel busy ratio, and the first beam meets the first condition.

With reference to the third aspect, in some implementations of the third aspect, that the processing unit determines a first beam from the N beams based on the channel occupancy ratio and the channel busy ratio of each beam includes:

The processing unit is configured to determine S beams from the N beams based on the channel occupancy ratio and the channel busy ratio of each beam, where S is a positive integer less than or equal to N, and the S beams meet the first condition.

The processing unit is further configured to determine the first beam from the S beams based on a reference signal received power RSRP of each beam, where the first beam is a beam with a largest RSRP in the S beams.

With reference to the third aspect, in some implementations of the third aspect, that the processing unit is configured to determine a first beam from the N beams based on the channel occupancy ratio and the channel busy ratio of each beam includes:

The processing unit is configured to determine L beams from the N beams based on the channel occupancy ratio and the channel busy ratio of each beam, where L is a positive integer less than or equal to N, and the L beams meet the first condition.

The processing unit is further configured to determine the first beam from the L beams based on the channel occupancy ratio and the channel busy ratio of each beam, where the first beam is a beam with smallest $\Sigma_{i \geq k} CR_j(i)$ in the L beams.

With reference to the third aspect, in some implementations of the third aspect, before the transceiver unit is configured to send the first sidelink information by using the first beam, the processing unit is further configured to determine to-be-sent information, where the to-be-sent information includes the first sidelink information and second sidelink information. When the first beam is used to send the first sidelink information and the second sidelink information, and the first beam does not meet the first condition, the processing unit is configured to determine a second beam, where the second beam meets the first condition, and the second beam belongs to the N beams.

The transceiver unit is further configured to send the second sidelink information by using the second beam.

With reference to the third aspect, in some implementations of the third aspect, the first sidelink information is initial transmission information, and the second sidelink information is retransmission information.

With reference to the third aspect, in some implementations of the third aspect, that the processing unit is configured to determine a channel occupancy ratio and a channel busy ratio of each of N beams includes:

The transceiver unit is configured to receive a first parameter, where the first parameter is from a second terminal device, the first parameter indicates a resource occupation status of a third beam, the first parameter is obtained by the second terminal device through measurement by using the third beam, the second terminal device is a receive end of a first terminal device, and the third beam is a receive beam corresponding to a fourth beam.

The processing unit is configured to determine a channel occupancy ratio and a channel busy ratio of the fourth beam based on the first parameter.

With reference to the third aspect, in some implementations of the third aspect, that the processing unit is configured to determine a channel occupancy ratio and a channel busy ratio of the fourth beam based on the first parameter includes:

The processing unit is configured to determine the channel occupancy ratio and the channel busy ratio of the fourth beam based on the first parameter and a second parameter, where the second parameter indicates a resource occupation status of the fourth beam, and the second parameter is obtained by the first terminal device through measurement by using the fourth beam.

With reference to the third aspect, in some implementations of the third aspect, when at least two of the N beams meet at least one of the following, the at least two beams have a same channel occupancy ratio and a same channel busy ratio:

RSRPs respectively corresponding to the at least two beams are greater than or equal to a first threshold;
or
the at least two beams belong to a same antenna panel;
or
an included angle between maximum radiation directions of main lobes of the at least two beams is less than or equal to a second threshold.

With reference to the third aspect, in some implementations of the third aspect, the processing unit is further configured to determine the N beams based on RSRPs respectively corresponding to M beams, where RSRPs respectively corresponding to the N beams are greater than or equal to a third threshold, and M is a positive integer greater than or equal to N.

It should be understood that the third aspect is an implementation on an apparatus side corresponding to the first aspect, and descriptions of the supplement, explanation, and beneficial effects of the first aspect are also applicable to the third aspect. Details are not described herein again.

According to a fourth aspect, a communication apparatus is provided. The communication apparatus includes a processing unit. The processing unit is configured to determine a first parameter, where the first parameter indicates a resource occupation status of a third beam, the first parameter is obtained by a second terminal device by measuring the third beam, the second terminal device is a receive end of a first terminal device, the third beam is a receive beam corresponding to a fourth beam, and the fourth beam is a transmit beam of the first terminal device.

According to a fifth aspect, a computer-readable medium is provided. The computer-readable medium stores program code executed by a communication apparatus, and the program code includes instructions used to perform the method according to the first aspect, or any one of the possible implementations of the first aspect, or all of the possible implementations of the first aspect.

According to a sixth aspect, a computer-readable medium is provided. The computer-readable medium stores program code executed by a communication apparatus, and the program code includes instructions used to perform the method according to the second aspect, or any one of the possible implementations of the second aspect, or all of the possible implementations of the second aspect.

According to a seventh aspect, a computer program product including instructions is provided. When the computer program product runs on a computer, the computer is enabled to perform the method according to the first aspect, or any one of the possible implementations of the first aspect, or all of the possible implementations of the first aspect.

According to an eighth aspect, a computer program product including instructions is provided. When the computer program product runs on a computer, the computer is enabled to perform the method according to the second aspect, or any one of the possible implementations of the second aspect, or all of the possible implementations of the second aspect.

According to a ninth aspect, a communication system is provided. The communication system includes an apparatus that has functions for implementing the method and various possible designs according to the first aspect and the second aspect, or any one of the possible implementations of the first aspect and the second aspect, or all of the possible implementations of the first aspect and the second aspect.

According to a tenth aspect, a processor is provided, configured to be coupled to a memory, and configured to perform the method according to the first aspect, or any one of the possible implementations of the first aspect, or all of the possible implementations of the first aspect.

According to an eleventh aspect, a processor is provided, configured to be coupled to a memory, and configured to perform the method according to the second aspect, or any one of the possible implementations of the second aspect, or all of the possible implementations of the second aspect.

According to a twelfth aspect, a chip is provided. The chip includes a processor and a communication interface, the communication interface is configured to communicate with an external component or an internal component, and the processor is configured to implement the method according to the first aspect, or any one of the possible implementations of the first aspect, or all of the possible implementations of the first aspect.

Optionally, the chip may further include a memory. The memory stores instructions. The processor is configured to execute the instructions stored in the memory or instructions from another module. When the instructions are executed, the processor is configured to implement the method according to the first aspect, or any one of the possible implementations of the first aspect, or all of the possible implementations of the first aspect.

Optionally, the chip may be integrated into a terminal apparatus and/or a network apparatus.

According to a thirteenth aspect, a chip is provided. The chip includes a processor and a communication interface, the communication interface is configured to communicate with an external component or an internal component, and the processor is configured to implement the method according to the second aspect, or any one of the possible implementations of the second aspect, or all of the possible implementations of the second aspect.

Optionally, the chip may further include a memory. The memory stores instructions. The processor is configured to execute the instructions stored in the memory or instructions from another module. When the instructions are executed, the processor is configured to implement the method according to the second aspect, or any one of the possible implementations of the second aspect, or all of the possible implementations of the second aspect.

Optionally, the chip may be integrated into a terminal apparatus and/or a network apparatus.

**BRIEF DESCRIPTION OF DRAWINGS**

FIG. 1 shows a system architecture to which an embodiment of this application is applicable;
FIG. 2 shows a slot to which an embodiment of this application is applicable;
FIG. 3 is a diagram of resource transmission to which an embodiment of this application is applicable;
FIG. 4 is a diagram of resource selection to which an embodiment of this application is applicable;
FIG. 5 is a diagram of a beam measurement method according to an embodiment of this application;
(a) in FIG. 6 is a diagram of resource measurement according to an embodiment of this application;

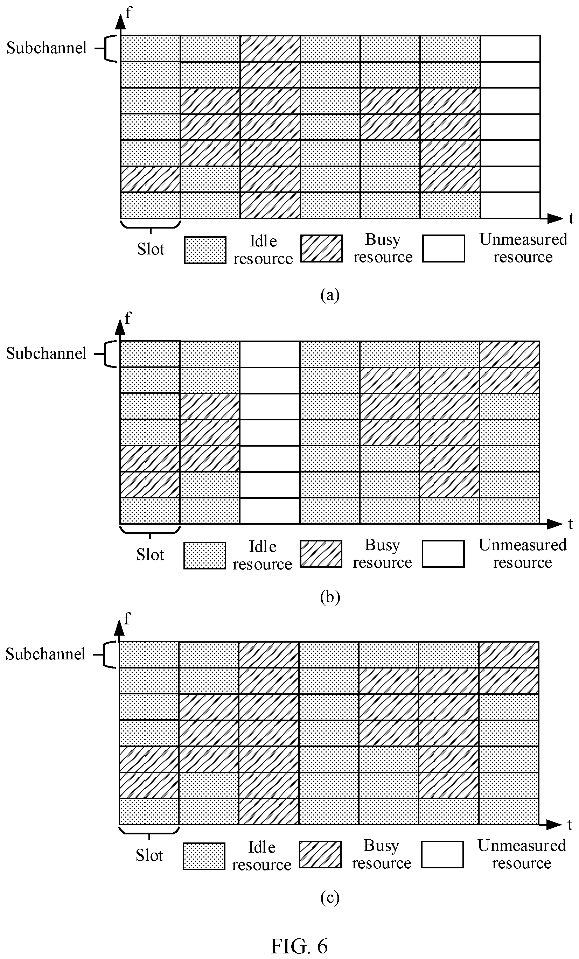

(b) in FIG. 6 is a diagram of another resource measurement according to an embodiment of this application;
(c) in FIG. 6 is a diagram of another resource measurement according to an embodiment of this application;

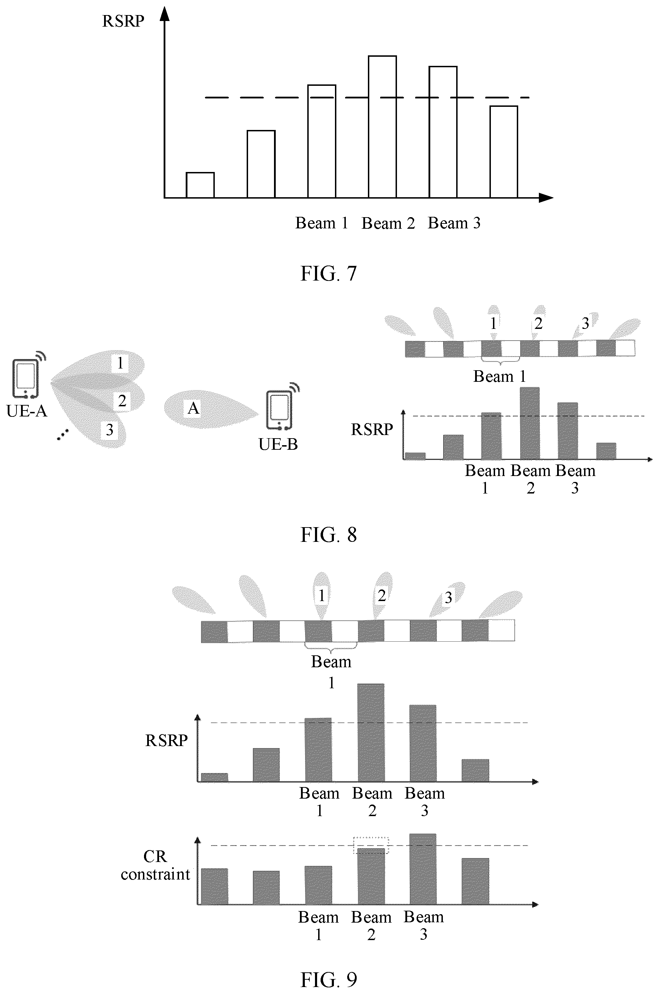

FIG. 7 is a diagram of beam RSRP measurement according to an embodiment of this application;
FIG. 8 is a diagram of beam RSRP measurement according to an embodiment of this application;
FIG. 9 is a diagram of beam RSRP measurement and CR measurement according to an embodiment of this application;

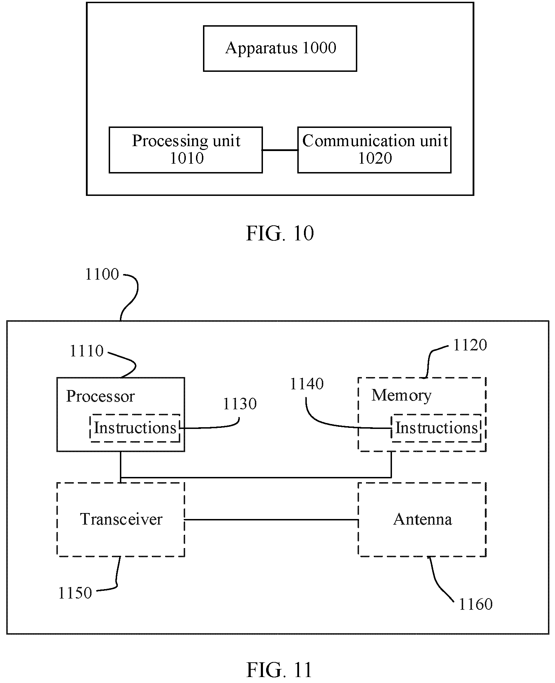

FIG. 10 is a block diagram of a communication apparatus according to an embodiment of this application; and
FIG. 11 is a block diagram of another communication apparatus according to an embodiment of this application.

**DESCRIPTION OF EMBODIMENTS**

The following describes technical solutions of this application with reference to accompanying drawings.
The technical solutions in embodiments of this application may be applied to various communication systems, for example, a 5G (fifth generation (5th generation, 5G)) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a sixth generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or another communication system.

In addition, the technical solutions provided in embodiments of this application may be applied to a link between a network device and a terminal device, or may be applied to a link between devices, for example, a device-to-device (device-to-device, D2D) link. The D2D link may also be referred to as a sidelink, and the sidelink may also be referred to as a side link, a secondary link, or the like. In embodiments of this application, the D2D link, the side link, and the secondary link each mean a link established between devices of a same type, and have a same meaning. The devices of a same type may be a link between terminal devices, a link between network devices, a link between relay nodes, or the like. This is not limited in embodiments of this application. For the link between terminal devices, there is a D2D link defined in release (release, Rel)-12/13 of the 3rd generation partnership project (3rd generation partnership project, 3GPP), and there is also a vehicle-to-everything link defined by the 3GPP for the internet of vehicles. It should be understood that V2X specifically further includes direct communication of vehicle-to-vehicle (vehicle-to-vehicle, V2V), vehicle-to-infrastructure (vehicle-to-infrastructure, V2I), and vehicle-to-pedestrian (vehicle-to-pedestrian, V2P), and a vehicle-to-network (vehicle-to-network, V2N) or vehicle-to-any entity V2X link, including a V2X link in Rel-14/15. V2X further includes an NR system-based V2X link in Rel-16 and later releases that are currently being studied by the 3GPP, and the like. V2V means communication between vehicles. V2P means communication between a vehicle and a person (including a pedestrian, a cyclist, a driver, or a passenger). V2I means communication between a vehicle and an infrastructure, and the infrastructure is, for example, a roadside unit (roadside unit, RSU) or a network device. In addition, V2N may be included in V2I, and V2N means communication between a vehicle and a network device. There are two types of RSUs: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

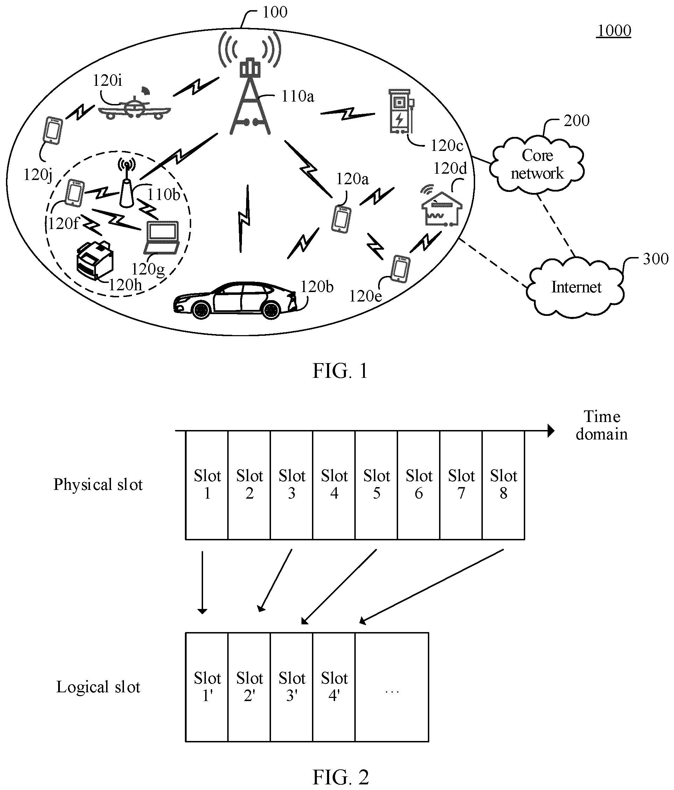

The following provides a diagram of an architecture of a mobile communication system to which embodiments of this application are applied. FIG. 1 is a diagram of an architecture of a communication system 1000 to which an embodiment of this application is applied. As shown in FIG. 1, the communication system includes a radio access network 100. Optionally, the communication system 1000 may further include a core network 200 and an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

It should be understood that, in the communication system in this application, an information transmitting end may be a network device or a terminal device, and an information receiving end may be a network device or a terminal device. This is not limited in this application.

In embodiments of this application, a UE may be referred to as a terminal device, a terminal apparatus, an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data for a user, for example, a handheld device having a wireless connection function or a vehicle-mounted device. The terminal device may include a user equipment, and is sometimes referred to as a terminal, an access station, a UE station, a remote station, a wireless communication device, a user apparatus, or the like. The terminal device is configured to connect a person, an object, a machine, or the like, may be widely used in various scenarios, and includes, for example but not limited to, terminal devices in the following scenarios: cellular communication, D2D, V2X, machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), smart grid (smart grid), smart furniture, smart office, smart wearable, smart transportation, smart city (smart city), an uncrewed aerial vehicle, and a robot. For example, the terminal device may be a mobile phone (mobile phone), a tablet computer (pad), a computer having a wireless transceiver function, a VR terminal, an AR terminal, a wireless terminal in industrial control, a vehicle, a wireless communication module in a vehicle, a telematics T-box (Telematics BOX), a roadside unit RSU, a wireless terminal in self-driving, a smart speaker in an IoT network, a wireless terminal device in telemedicine, a wireless terminal device in smart grid, a wireless terminal device in transportation safety, a wireless terminal device in smart city, or a wireless terminal device in smart home. This is not limited in embodiments of this application.

By way of example, and not limitation, in embodiments of this application, the terminal device may alternatively be a wearable device. The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of the user. The wearable device is not only a hardware device, but also implements a powerful function through software support, data exchange, and cloud interaction. Generalized wearable intelligent devices include full-featured and large-size devices that can implement complete or partial functions without depending on smartphones, such as smart watches or smart glasses, and devices that focus on only one type of application function and need to work with other devices such as smartphones, for example, various smart bands or smart jewelry for monitoring physical signs. In addition, the terminal device in embodiments of this application may alternatively be a terminal device in an IoT system. The IoT is an important part of future development of information technologies. A main technical feature of the IoT is connecting a thing to a network through a communication technology, to implement an intelligent network for human-machine interconnection and thing-thing interconnection.

If various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU). The terminal device in this application may alternatively be a vehicle-mounted module, a vehicle-mounted assembly, a vehicle-mounted component, a vehicle-mounted chip, or an on-board unit that is built in the vehicle as one or more components or units. The vehicle uses the vehicle-mounted module, the vehicle-mounted assembly, the vehicle-mounted component, the vehicle-mounted chip, or the on-board unit that is built in the vehicle, to implement a method in this application.

It should be understood that the network device in the wireless communication system may be a device that can communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

In embodiments of this application, a function of the base station may alternatively be performed by a module (for example, a chip) in the base station, or may be performed by a control subsystem including a base station function. The control subsystem including a base station function herein may be a control center in the foregoing application scenarios, such as smart grid, industrial control, smart transportation, and smart city. A function of the terminal may alternatively be performed by a module (for example, a chip or a modem) in the terminal, or may be performed by an apparatus including a terminal function.

Within network coverage, the terminal apparatus may obtain SL resource pool (resource pool) configuration information and/or SL bandwidth part (bandwidth part, BWP) configuration information by receiving a system information block (system information block, SIB) of the network device, cell-specific (cell-specific) radio resource control (radio resource control, RRC) signaling, or terminal apparatus-specific (UE-specific) RRC signaling. Alternatively, the terminal apparatus may use pre-configured SL resource pool configuration information or SL BWP configuration information, for example, when there is no network coverage. The SL resource pool configuration information includes resource pool resource information, and the resource pool resource information indicates an SL resource pool. A resource pool is a set of time-frequency resources for sidelink communication between UEs. The resource pool may include a code domain resource. A resource in the resource pool includes a resource used for sending and receiving at least one of the following physical channels by the terminal apparatus: a PSCCH (used to carry sidelink control information (sidelink control information, SCI)), a PSSCH (used to carry at least one of control information, data, sidelink CSI feedback information, and the like), a PSDCH (used to carry a discovery message), a PSFCH (used for sidelink feedback information, where the sidelink feedback information may be used for response feedback information for data information (including a hybrid automatic repeat request (hybrid automatic repeat request, HARQ), for example, an acknowledgment (acknowledgment, ACK) or a negative acknowledgment (negative acknowledgment, NACK), and further including channel state indication (channel state information, CSI) feedback information), and may further indicate at least one of the following information, for example, energy saving information, resource assistance information (including a resource recommended, a resource not recommended, a resource collision, a resource reservation conflict, a half-duplex conflict that has occurred in the past or is about to occur in the future, or the like)), a PSBCH (used to carry information related to sidelink synchronization), and the like. A type of a service carried on the PSSCH may include a unicast communication type, a multicast communication type, and/or a broadcast communication type. In time domain, the SL resource pool includes one or more time units. The time unit may be one or more symbols, one or more slots (slots), one or more mini-slots (mini-slot), one or more subframes, one or more frames, or the like. The one or more time units may be consecutive or discrete in terms of time. It should be understood that time domain units in one resource pool are logically consecutive. One radio frame may include a plurality of subframes, one subframe may include one or more slots, and one slot may include at least one symbol (symbol). Alternatively, one radio frame may include a plurality of slots, and one slot may include at least one symbol. One SL slot is located in one slot in time domain, and occupies a plurality of consecutive symbols. A start symbol (start symbol) location of the SL slot and a quantity of occupied consecutive symbols (SL symbols length) are both configured by a higher layer. In this application, for understanding of definitions of a symbol, a mini-slot, a slot, a subframe, and a frame, refer to 3GPP TS 38.211.

As shown in FIG. 2, a slot 1 to a slot 8 are consecutive slots in terms of time, and the slots are referred to as physical slots (physical slot). The physical slots, namely, the slot 1, the slot 3, the slot 5, and the slot 8, are configured as slots that belong to one resource pool. Slots included in a resource pool may be nonconsecutive in terms of time. Therefore, from a perspective of the resource pool, the slot 1, the slot 3, the slot 5, and the slot 8 in the physical slots correspond to a slot 1', a slot 2', a slot 3', and a slot 4' in the resource pool. In this case, consecutive slots (namely, the slot 1', the slot 2', the slot 3', and the slot 4') included in the resource pool are logically consecutive slots in the resource pool, and the slots that are logically consecutive but not necessarily consecutive in terms of time are referred to as logical slots (logical slot).

A start time unit is a $1^{st}$ time unit of a resource in time domain.

An end time unit is a last time unit of a resource in time domain.

In an example in which a slot is a time unit, a resource shown in FIG. 2 includes the slot 1 to the slot 8 in time domain. In this case, the slot 1 is a start time unit of the resource, and the slot 8 is an end time unit of the resource.

The SL resource pool configuration information may further include PSCCH configuration information. The PSCCH configuration information includes a quantity of symbols occupied by a PSCCH in one slot and a quantity of RBs occupied by a PSCCH in one subchannel. The SL BWP configuration information may include SL resource pool information that is used to configure a quantity of resource pools included in a BWP. The SL BWP configuration information may include SL bandwidth information indicating a size of a bandwidth for SL communication, for example, indicating that an SL bandwidth is 20 megahertz (MHz).

The SL BWP configuration information may further include SL symbol information indicating a start SL symbol location in one slot and a quantity of occupied consecutive SL symbols. The SL BWP configuration information may further include subcarrier spacing and cyclic prefix information of an SL indicating a subcarrier spacing and a cyclic prefix that are used for SL communication. The cyclic prefix indicates an extended cyclic prefix or a normal cyclic prefix. In a possible configuration, the SL BWP configuration information may further include the SL resource pool configuration information. In this application, unless a meaning of the time unit is specially specified, a slot is used for description, but the time unit is not limited to only a slot. Unless a meaning of a time/frequency domain unit is specially specified, a subchannel is used for description, but the frequency domain unit is not limited to only a subchannel.

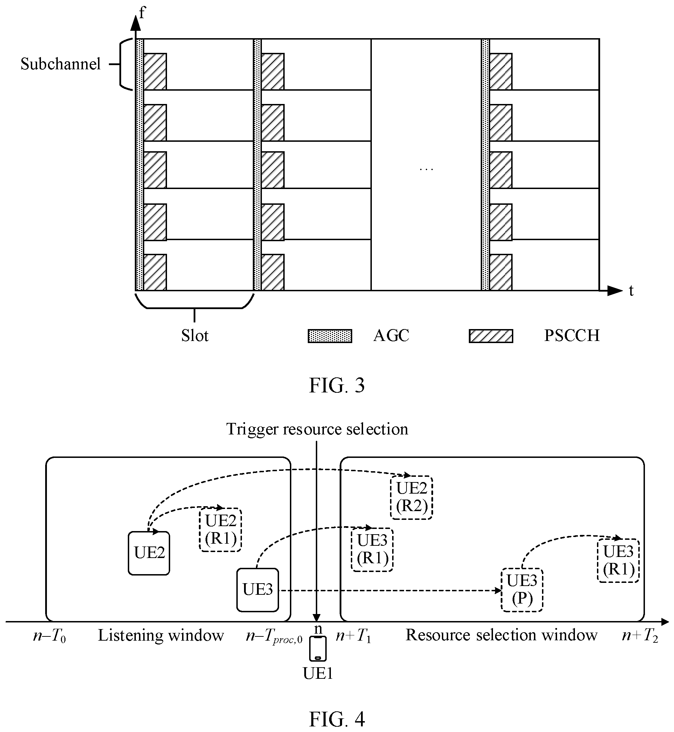

SCI of an NR SL system is classified into first-stage SCI and second-stage SCI. The PSCCH carries the first-stage SCI. The first-stage SCI is used to schedule the second-stage SCI and the PSSCH. Because the SL is a distributed system, all UEs need to correctly decode the first-stage SCI before decoding the second-stage SCI and the PSSCH. However, to reduce complexity of blind detection (blind decoding) performed by the UE on the PSCCH, a resource location of the PSCCH is relatively fixed, and carried first-stage SCI format information is also relatively unique. In other words, the UE does not need to blindly detect a time-frequency resource location of the PSCCH, and does not need to blindly detect SCI in different formats, and the UE only needs to detect, at a fixed time-frequency resource location of the PSCCH, whether there is first-stage SCI. The PSCCH may exist on each subchannel in each slot. To be specific, a time domain start location of one PSCCH is a $2^{nd}$ symbol used for SL transmission in each slot, and a length is two or three symbols (determined by the resource pool configuration information); and a frequency domain location is a minimum PRB index of each subchannel, and a length is at least 10 PRBs (determined by the resource pool configuration information) but does not exceed a size of the subchannel, as shown in FIG. 3.

A frequency resource assignment field and a time resource assignment field in the first-stage SCI respectively indicate a frequency domain resource and a time domain resource for transmitting the PSSCH. A resource reservation period field indicates that a resource for transmitting the PSSCH is periodically reserved. A value of the resource reservation period field is configured by the network device, pre-configured, or predefined, for example, indicated by using first RRC signaling, and the first RRC signaling may be used to determine sl-ResourceReservePeriod1. A format of the second-stage SCI is indicated by a 2nd-stage SCI format field in the first-stage SCI. An existing second-stage SCI format field is shown in Table 1.

Table 1 Correspondence between a second-stage SCI format and an indication field

| Value of a second-stage SCI format field (Value of a 2nd-stage SCI format field) | Second-stage SCI format (2nd-stage SCI format) |
|---|---|
| 00 | SCI format 2-A |
| 01 | SCI format 2-B |
| 10 | SCI format 2-C |
| 11 | Reserved |

The foregoing describes the first-stage SCI and the second-stage SCI. The following describes a user autonomous resource selection mode (mode 2), that is, SL mode 2, in the V2X SL of Rel-16.

In this mode, a transmission resource of a transmit end UE does not depend on a base station. The transmit end UE autonomously selects, in a resource selection window based on a result of sensing in a sensing window of the transmit end UE, a transmission resource for communication. It is assumed that the transmit end UE triggers resource selection in a slot n. A specific resource selection procedure is shown in FIG. 4:

Step 1: Determine a candidate resource $R_{x,y}$ and a resource selection window $[n + T_1, n + T_2]$ in a unit of one slot and $L_{subCH}$ contiguous subchannels, where $0 \leq T_1 \leq T_{proc,1}^{SL}$, $T_{proc,1}^{SL}$ is determined in Table 2, $\mu_{SL}$ is a configured subcarrier spacing, and $T_1$ is selected based on implementation. If $T_{2min}$ (higher-layer configuration) is less than a remaining *PDB* (data packet delay), $T_{2min} \leq T_2 \leq PDB$ (data packet delay), and $T_2$ is selected based on implementation; otherwise, $T_2$ is equal to the remaining *PDB*.

Table 2 Correspondence between a subcarrier spacing and a maximum slot value of a resource selection window

| $\mu_{SL}$ | $T_{proc,1}^{SL}$ [slot] |
|---|---|
| 0 | 3 |
| 1 | 5 |
| 2 | 9 |
| 3 | 17 |

Step 2: Determine a sensing window $\left[n - T_0, n - T_{proc,0}^{SL}\right)$, where $T_0$ is configured by a higher layer parameter, and $T_{proc,0}^{SL}$ is determined in Table 3.

Table 3 Relationship between a sensing window element and a subcarrier spacing

| $\mu_{SL}$ | $T_{proc,0}^{SL}$ [slot] |
|---|---|
| 0 | 1 |
| 1 | 1 |
| 2 | 2 |
| 3 | 4 |

Step 3: Determine a reference signal received power (Reference Signal Received Power, RSRP for short)

threshold $Th(p_i, p_j)$, where the RSRP threshold and $prio_{TX}$ of to-be-sent data are related to a priority $prio_{RX}$ indicated by received sidelink control information (Sidelink Control Information, SCI for short), and $Th(p_i, p_j)$ is specifically an ($prio_{RX}$ +($prio_{TX}$-1)∗8)th threshold in an RSRP threshold set configured for a resource pool.

Step 4: Initialize an available resource set $S_A$ to include all time-frequency resources in the resource selection window.

Step 5: Exclude the following time-frequency resources from $S_A$: slots reserved for all period resources configured in a resource pool corresponding to a slot (a sending slot) that is not sensed in the sensing window.

Step 5a: If the time-frequency resources excluded from $S_A$ are less than X% of the total resources in the resource selection window, perform initialization in step 4 again.

Step 6: Continue to exclude the following time-frequency resources from $S_A$: received first-stage SCI is successfully decoded, a result of performing RSRP measurement on a physical sidelink shared channel (Physical Sidelink Shared Channel, PSSCH for short) demodulation reference signal (Demodulation Reference Signal, DMRS for short) of a time-frequency resource reserved by the received first-stage SCI is greater than the RSRP threshold determined in step 3, and the time-frequency resource reserved by the received first-stage SCI is in the resource selection window, including a retransmission resource indicated by the first-stage SCI and a periodically reserved resource.

Step 7: If remaining resources in $S_A$ are less than X% of the total resources in the resource selection window, and a value of X% is configured by the resource pool and is related to $prio_{TX}$, increase the RSRP threshold determined in step 3 (increase by 3 each time), until the remaining resources in $S_A$ are not less than X% of the total resources in the resource selection window, and continue to perform step 4.

$S_A$ is reported to a higher layer (MAC layer).

Time-frequency resources ($r_0$, $r_1$, $r_2$, ...) are randomly selected from $S_A$ to send data. Before sending the data, resource re-evaluation is performed on ($r_0$, $r_1$, $r_2$, ...), and after re-evaluation, preemption detection is performed on resources ( $r_0'$, $r_1'$, $r_2'$, $\cdots$ ) selected from $S_A$.

A user performs resource re-evaluation and preemption detection in at least a slot m- $T3$ $(T_3 = T_{proc,1}^{SL})$, and the UE may additionally trigger resource re-evaluation and/or preemption detection before and after the slot m-T3 based on implementation. A method for determining whether ($r_0$, $r_1$, $r_2$, ...) and ( $r_0'$, $r_1'$, $r_2'$, $\cdots$ ) need to be excluded is the same as that in step 7, and one of the following conditions is met: (1) An $sl\text{-}PreemptionEnable$ parameter is provided and is configured to be enabled, and $prio_{TX} > prio_{RX}$. (2) An $sl\text{-}PreemptionEnable$ parameter is provided and is not configured to be enabled, $prio_{RX} < prio_{pre}$, and $prio_{TX} > prio_{pre}$, where $prio_{pre}$ is configured by a higher layer. If $r_i$ and/or $r_i'$ in ($r_0$, $r_1$, $r_2$, ...) and ( $r_0'$, $r_1'$, $r_2'$, $\cdots$ ) do/does not belong to $S_A$ (that is, $r_i$ and $r_i'$ are excluded during re-evaluation and/or preemption detection), $r_i$ and/or $r_i'$ are/is reselected. A slot m is a next slot for sending, that is, the slot m belongs to ($r_0$, $r_1$, $r_2$, ...) and ( $r_0'$, $r_1'$, $r_2'$, $\cdots$ ).

In addition, currently, in an FR1 distributed system, a quantity of UEs and resources used by the UEs cannot be controlled. In a case in which there is no central node (for example, a base station), congestion control is a key technology for ensuring system performance. A congestion control mechanism is also introduced in the SL. Each UE measures a channel busy ratio (Channel Busy Ratio, CBR) and a channel occupancy ratio (Channel Occupancy Ratio, CR), and adjusts the CR based on a configured CBR threshold. In this way, a resource usage of each UE is restricted, thereby avoiding system congestion.

A frequency range of FR1 is 450 MHz to 6000 MHz (also referred to as sub6G), and a maximum system bandwidth of a frequency band below 6G is 100 MHz. A frequency range of FR2 is 24250 MHz to 52600 MHz (5G millimeter-wave band), and a maximum system bandwidth is 400 MHz.

In FR1, the CR is defined as a ratio of a quantity of subchannels that have been transmitted by the UE in a CR window and that are to be transmitted in the future to a total quantity of subchannels in the CR window, and represents a channel occupation degree of the UE in the CR window. Specifically, the CR is a ratio of a quantity of subchannels that have been transmitted by the sending UE in a CR window [$n$ - $a$, $n$ - 1] and that are to be transmitted in a future window [$n$, $n$ + $b$] to a total quantity of subchannels in the CR window. The CBR represents a channel busy degree within a period of time, and is determined by a ratio of a quantity of subchannels that exceed a received signal strength indicator (Received Signal Strength Indicator, RSSI) threshold in the subchannels measured by the UE in [$n$ - $a$, $n$ - 1] to a total quantity of measured subchannels. Therefore, UE transmission needs to meet the following constraint:

$$\sum_{i \geq k} CR(i) \leq CR_{Limit}(k) \qquad\qquad (1)$$

Herein, CR(i) represents a CR transmitted by a PSSCH of a priority i in a slot *n - N*; *N* is a congestion control processing time; and $CR_{Limit}(k)$ represents a CR constraint, and is related to a priority *k* and a CBR of the slot *n - N* (configured by a higher layer). If the CR of the UE does not meet Formula (1), the UE cannot perform transmission.

The CR window may be a part or all of the foregoing resource selection window.

In addition, beam management may be performed on beams of FR2. Beam management is a process in which a base station (Base Station, BS) and a UE obtain and maintain a set of beams used for sending and receiving, and is a reference workflow for beamforming in a MIMO system. Beam management includes the following four technical points:

①beam determination (beam determination): a process in which a BS or a UE selects a transmit beam or a receive beam of the BS or the UE;
②beam measurement (beam measurement): a process in which a BS or a UE measures a received beamformed signal;
③ beam reporting (beam reporting): a process in which a UE reports a beam measurement result to a base station; and
④beam sweeping (beam sweeping): a process in which a BS or a UE sequentially selects, in a specified sweeping manner within a time period, a beam for sending or receiving, so as to cover a spatial area.

Beam management may be classified into three working states. Operations in the states are as follows:

P-1: The UE measures a BS transmit beam set, and selects a BS transmit beam and a UE receive beam.
P-2: Based on P-1, the UE measures a smaller BS transmit beam set, to improve a BS transmit beam.
P-3: The UE measures a same BS transmit beam by using different receive beams, to improve a receive beam of the UE.

Based on the foregoing four technical points and the operations of the three states, downlink beam management is performed, and a basic procedure of downlink beam management is as follows: The BS configures a maximum of 64 beam directions, where each beam direction corresponds to one synchronization signal block (Synchronization Signal Block, SSB) and a time-frequency resource used by the UE for beam reporting. The BS sequentially sends an SSB to each direction in a sweeping manner, and the UE performs beam measurement to obtain a reference signal received power (Reference Signal Received Power, RSRP) of the SSB. The UE needs to map the measured SSB RSRP to a 6-bit SSB sequence number. Therefore, the UE obtains three least significant bits from a physical broadcast channel (Physical Broadcast Channel, PBCH) demodulation reference signal (Demodulation Reference Signal, DMRS), obtains three most significant bits from PBCH payload (payload) bits, and obtains a sequence number of the received SSB after combination. The PBCH DMRS is generated based on a pseudo-random sequence, and a manner of carrying the three least significant bits of the SSB sequence number is to determine an initial value $c_{init}$ of the pseudo-random sequence by using the three bits. The UE obtains the SSB sequence number by performing blind detection on the PBCH DMRS. Then, the UE selects an SSB set through RSRP comparison, and reports an SSB sequence number in the set and a corresponding RSRP to the base station on a given time-frequency resource. The base station performs beam determination by using reported information. In this way, an initial beam selection process is completed. It should be understood that a similar procedure but a different reference signal may be used for uplink beam management.

The foregoing congestion control is designed for the SL distributed system on the FR1 frequency band. Each UE measures the CBR and the CR, and adjusts the CR based on the configured CBR threshold. In this way, the resource usage of each UE is restricted, thereby avoiding system congestion. The FR1 frequency band does not involve transmission directivity. In other words, it is considered that the UE performs receiving and sending in a large range, and the CBR and CR are measured and calculated based on the entire transmission space. However, on the FR2 frequency band, the UE usually uses directional beams for receiving and sending, and only a UE whose transmit and receive beams match can complete a receiving and sending process. Therefore, on the FR2 frequency band, because a beam is directional, listening and resource selection in a resource selection procedure in the SL mode 2 are directional, and channel congestion degrees in different directions may be different. If a congestion control manner for FR1 is still used in FR, measurement may be inaccurate. For example, a CBR and a CR measured for a UE may be inconsistent with actual usage of some beams. For example, a channel is congested in a direction of a beam 1, but may not be congested in a direction of a beam 2. Therefore, in an SL FR2 system, beam-based congestion measurement and congestion control need to be considered.

For the foregoing problem, this application provides a beam measurement method. The method may be applied to the SL FR2 system, and can accurately measure a beam usage status. It should be understood that there may be a plurality of communication apparatuses, for example, terminal devices, in the SL FR2 system. In embodiments of this application, one of the terminal devices is used as an example to describe the solution, but this is not limited thereto. For example, the measurement method in this application can be applied to any communication apparatus that needs beam measurement in a communication system.

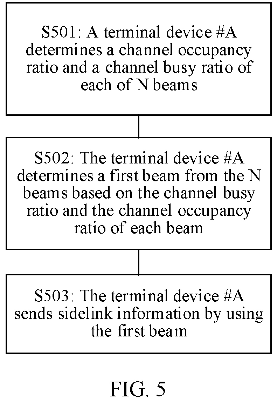

FIG. 5 is a diagram of a beam measurement method according to an embodiment of this application.

The method may include the following steps. A terminal device #A is used as an example of a first terminal device below.

S501: The terminal device #A determines a channel occupancy ratio and a channel busy ratio of each of N beams.

The channel occupancy ratio (Channel Occupancy Ratio, CR) may indicate a channel occupancy status of a beam within a time period. The channel busy ratio (Channel Busy Ratio, CBR) may indicate a channel busy status of a beam within a time period.

That the terminal device #A determines a channel occupancy ratio and a channel busy ratio of each of N beams may also be understood as that the terminal device #A determines a channel busy status of each of the N beams. The channel busy status includes the channel occupancy (channel occupancy) status and/or the channel busy (channel busy) status.

In a possible implementation, the channel occupancy ratio is a channel occupancy degree of a beam in a CR window. For the CR window, refer to the foregoing descriptions of the CR window. Details are not described again.

In an example, the CR window may include [$x - a, x - 1$], where x is a moment in time domain, and x and a are respectively positive integers. A channel occupancy ratio of a beam j may be a ratio of a sum of a quantity of subchannels that have been transmitted in the beam j in the CR window [$x - a, x - 1$] and a quantity of subchannels that are to be transmitted in a future window [$x, x + b$] to a total quantity of subchannels in the total window (that is, [$x - a, x + b$]), where b is a positive integer.

In other words, the channel occupancy ratio $CR_j$ of the beam j meets the following relationship:

$$CR_j = \frac{CH_j}{CH_{total,j}},$$

where

j=1, ..., N, $CR_j$ represents a channel occupancy ratio of the beam j within a first time period, $CH_{total,j}$ represents a total quantity of subchannels of the beam j within the first time period, and $CH_j$ represents a sum of a quantity of subchannels that have been transmitted and a quantity of subchannels that are to be transmitted in the beam j within the first time period.

Specifically, an example in which a beam A is used as the beam j is used for description. For example, the first time period (that is, the CR window) is [t1, t5], including a transmitted window [t1, t3] and a future window [t4, t5], where t1 to t5 are respectively slot indexes. If a quantity of subchannels that have been transmitted in the CR window is 6, a quantity of subchannels that are to be transmitted in the beam A in the future window is 2, and a total quantity of subchannels in the CR window is 10, a channel occupancy ratio within this time period is (6+2)/10=0.8.

In another example, the CR window may be [x-a, x-1], where x is a slot in time domain, and x and a are respectively positive integers. A channel occupancy ratio of a beam j may be a ratio of a quantity of subchannels that have been transmitted in the beam j in the CR window [x-a, x-1] and a quantity of subchannels that are to be transmitted in a future window [x, x+b] to a total quantity of subchannels of the beam j of the terminal device #A in the CR window, where b is a positive integer.

The total quantity of subchannels of the beam j of the terminal device #A may be understood as a total quantity of subchannels that are sent and received by the terminal device #A by using the beam j.

Specifically, an example in which a beam A is used as the beam j is used for description. For example, the first time period (that is, the CR window) is [t1, t5], including a transmitted window [t1, t3] and a future window [t4, t5], where t1 to t5 are respectively slot indexes. If a quantity of subchannels that have been transmitted in the beam A in the CR window is 6, a quantity of subchannels that are to be transmitted in the beam A in the future window is 2, a total quantity of subchannels in the CR window is 10, and a total quantity of subchannels of the beam A of the terminal device #A in the CR window is 9, a channel occupancy ratio of the beam A is (6+2)/9=0.889.

It should be understood that the foregoing time period may alternatively be represented by another time domain resource, for example, a moment. This is not limited in embodiments of this application.

It should be understood that the channel occupancy ratio in this example is calculated based on a beam. In other words, the channel occupancy ratio in this example is beam-level. In a process of calculating a beam-level channel occupancy ratio, another beam does not need to be considered. For example, in the foregoing example, the channel occupancy ratio is calculated only for the beam A. A manner of calculating a channel occupancy ratio of another beam is similar to this, and details are not described again.

In a possible implementation, the channel busy ratio is a channel busy degree of the beam j within a period of time (or a time period, for example, a second time period).

In an example, the channel busy ratio is determined by a ratio of a quantity of subchannels that exceed an RSSI threshold in the subchannels of the beam j within a measurement time [x-a, x-1] to a total quantity of measured subchannels.

In other words, a channel busy ratio of the beam j meets the following relationship:

$$\text{CBR}_j = \frac{Q}{\text{CH}_{\text{total}}},$$

where

j=1, ..., N, CBR, represents a channel busy ratio of the beam j within a time period, Q represents a quantity of subchannels greater than or equal to the RSSI threshold in the beam j within the time period, and $CH_{total}$ represents a total quantity of subchannels or a total quantity of measured subchannels of the beam j within the time period.

Specifically, an example in which a beam A is used as the beam j is used for description below. For example, if the time period is [t1, t5], a quantity of subchannels that exceed the RSSI threshold in the subchannels of the beam A is 8, a total quantity of subchannels of the beam A within the time period is 10, and a total quantity of measured subchannels is 9, a channel busy ratio of the beam A within the time period is 8/10=0.8, or a channel busy ratio of the beam A within the time period is 8/9=0.889.

It should be understood that a total quantity of subchannels of a beam within a time period may be the same as or certainly different from a total quantity of measured subchannels. For example, if all subchannels of the beam A are measured within a time period, a total quantity of subchannels of the beam A is the same as a total quantity of measured subchannels. For another example, not all subchannels of the beam A are measured within a time period, and the measured subchannels in total are a part of all the subchannels of the beam A. In this case, a quantity of all the subchannels of the beam A is greater than the total quantity of measured subchannels. However, both the two may be used to determine a channel busy status of the beam A within a time period.

In a possible manner, a quantity of subchannels that exceed the RSSI threshold in the subchannels of the beam A may be measured by a terminal device #B (an example of a second terminal device). The terminal device #B is a receive end of the terminal device #A. The beam A is a transmit beam (namely, a third beam) of the terminal device #A, and a beam B is a receive beam (namely, a fourth beam) corresponding to the beam A corresponding to the terminal device #B.

For example, the channel busy ratio may be determined based on a ratio of a quantity of subchannels that exceed the RSSI threshold in subchannels of the receive beam B within the measurement time [x-a, x-1] of the receive beam B of the terminal device #B corresponding to the beam A to a total quantity of measured subchannels.

The foregoing measurement result may be represented by using a parameter. For example, the terminal device #B obtains a first parameter through measurement by using the beam B, where the first parameter indicates a resource usage status of the beam B. Specifically, the first parameter may be a CBR obtained through calculation.

It should be understood that, in the foregoing solution, an RSSI is used as a parameter representation example of channel quality, or an RSSI may be replaced with another parameter that can represent channel quality, such as an RSRP or reference signal received quality (reference signal received quality, RSRQ). This is not limited herein.

Optionally, the terminal device #A may determine the channel busy ratio based on both a measurement result of the terminal device #A and a measurement result of a receive end device communicating with the terminal device #A. For example, a CBR of the beam A may be determined based on both a measurement result of the beam A of the terminal device #A and a measurement result of the beam B of the terminal device #B. The CBR is based on the measurement result of the beam A of the terminal device #A. If the measurement result fed back by the terminal device #B is received, the measurement result fed back by the beam B of the terminal device #B is combined with the measurement result of the beam A of the terminal device #A. If the measurement results conflict, the measurement result fed back by the beam B of the terminal device #B is preferentially considered. (a) and (b) in FIG. 6 respectively show a measurement result of the beam A of the terminal device #A and a measurement result of the beam B of the terminal device #B. A final CBR of the terminal device #A may be obtained based on a combination result, as shown in (c) in FIG. 6.

The foregoing measurement result may be represented by using a parameter. For example, the terminal device #B obtains a first parameter through measurement by using the beam B, where the first parameter indicates a resource usage status of the beam B. Specifically, the resource usage status of the beam B is shown in (b) in FIG. 6. The terminal device #A obtains a second parameter through measurement by using the beam A, where the second parameter indicates a resource usage status of the beam A. Specifically, the resource usage status of the beam A is shown in (a) in FIG. 6. In a possible manner, the first parameter or the second parameter may be a quantity of idle resources, a quantity of busy resources, a quantity of unmeasured resources, and/or the like obtained through measurement. The quantity of resources may be understood as a quantity of resource units, for example, time-frequency resource units. The time-frequency resource unit corresponds to one time domain resource unit, for example, a slot, in time domain, and corresponds to one frequency domain resource unit, for example, a subchannel, in frequency domain.

For example, the first parameter is a channel resource occupation status obtained by the terminal device #B through measurement by using the beam B, and is indicated in a form of an available resource set $S_A$. For example, occupation statuses of all time-frequency resources in a measurement range are indicated in a form of a bitmap. To be specific, the occupation status of each time-frequency resource block is indicated by bits 0 and 1, where 1 indicates occupied, 0 indicates not occupied; or 1 indicates an available resource, and 0 indicates an unavailable resource.

The terminal device #B may indicate/feed back the measurement result (that is, the first parameter) to the terminal device #A, where the indication/feedback information may be carried in RRC signaling, a media access control element (MAC Control Element, MAC CE), or SCI. Optionally, the terminal device #A may indicate/request the terminal device #B to perform CBR measurement, where the indication/request information may be carried in RRC signaling, a MAC CE, or SCI.

In other words, the terminal device #A may determine a channel status of a transmit beam based on a measurement result of the receive end. Based on beam directivity, channels of receive and transmit beams of the terminal are not completely the same, and a channel status obtained by the receive end through measurement is closest to an actual beam usage status. A solution of performing CBR calculation based on a measurement feedback result of the receive end is more accurate for evaluating a channel occupation status. This further improves beam measurement accuracy.

In another possible implementation, because channel characteristics of two or more adjacent beams of a same terminal device may be close or the same (for example, channel busy ratios of a beam 1 and a beam 2 are the same), CR and CBR measurement results of the at least two beams may be uniformly calculated.

Optionally, when different beams meet at least one of the following, measurement results of the different beams may be uniformly calculated:

Condition 1: RSRPs respectively corresponding to at least two beams are greater than or equal to a first threshold, and the RSRPs respectively corresponding to the at least two beams are close.

The first threshold may be configured, or may be predefined. This is not limited in this application.

For example, as shown in FIG. 7, RSRP measurement results of the beam 1, the beam 2, and a beam 3 are all greater than the first threshold, and the RSRP measurement results of the beam 1, the beam 2, and the beam 3 are close. In this case, CR and CBR measurement results of the beam 2 and the beam 3 may be uniformly calculated.

That the RSRP measurement results of the beam 1, the beam 2, and the beam 3 are close may be that a difference or a ratio of the RSRP measurement results of the beam 1, the beam 2, and the beam 3 is within a preset range. The preset range may be determined by using a preset threshold.

Optionally, the RSRP corresponding to each beam may be an RSRP obtained during measurement in a beam sweeping/measurement process.

Condition 2: At least two beams belong to a same panel.

In other words, whether measurement results of beams are uniformly calculated is determined by an antenna panel. For example, CR and CBR measurements of a plurality of different beams on a same panel are uniformly calculated.

Condition 3: An included angle between maximum radiation directions of main lobes of at least two beams is less than or equal to a second threshold.

In other words, based on the maximum radiation directions of the main lobes, to be specific, if the included angle between the maximum radiation directions of the main lobes of the two or more beams is less than a threshold, it is determined that CR and CBR measurements of these beams are uniformly calculated.

The threshold may be 30°, 45°, 60°, 90°, or the like. It should be understood that the threshold (or the second threshold) may be predefined, or may be configured. This is not limited in embodiments of this application.

The main lobe is a maximum radiation beam in an antenna pattern. The origin of the main lobe is related to antenna directivity. The "antenna directivity" means a relationship between a relative value of an antenna radiation location and a space direction under a same distance in a remote area. Generally, the antenna pattern indicates the antenna directivity. The antenna pattern is generally petal-shaped, and therefore is also referred to as a lobe pattern. The antenna pattern usually has two or more lobes. A lobe with maximum radiation intensity is referred to as a main lobe, and the other lobes are referred to as side lobes or secondary lobes.

When different beams meet at least one of the foregoing:

For example, the channel occupancy ratio may be a channel occupancy degree of a correlation range of the beam A in a CR window, namely, a ratio of a quantity of subchannels that have been transmitted in the correlation range of the beam A in the CR window [$x$ - $a$, $x$ - 1] and a quantity of subchannels that are to be transmitted in a future window [$x$, $x$ + $b$] to a total quantity of subchannels in the CR window.

In other words, the channel occupancy ratio of the beam A meets the following relationship:

$$CR_{\mathrm{j}} = \frac{card\left(CH_j \cup CH_k\right)}{CH_{total}},$$

where

$CH_{total}$ represents the total quantity of subchannels in the CR window [$x - a, x + b$], $CH_j = \{ch_{j,m}\}$ represents a set of subchannels that have been transmitted and that are to be transmitted in the beam j in the CR window [$x - a, x + b$], $CH_k = \{ch_{k,m}\}$ represents a set of subchannels that have been transmitted and that are to be transmitted in a beam k (a beam in a correlation range of the beam j) in the CR window [$x - a, x + b$], and $card(A)$ represents a quantity of elements in a set A.

In other words, calculation of the channel occupancy ratio is related to a common occupation status of beams in the correlation range of the beam A. It should be understood that the beam in the correlation range of the beam A herein is a beam that meets at least one of the condition 1, the condition 2, and the condition 3 with the beam A.

For another example, the channel occupancy ratio is a ratio of a quantity of subchannels that have been transmitted in a correlation range of the beam j in a CR window [$x - a, x - 1$] and a quantity of subchannels that are to be transmitted in a future window [$x, x + b$] to a total quantity of subchannels of the UE in the correlation range of the beam A in the CR window.

In other words, the channel occupancy ratio meets the following relationship:

$$CR_{j} = \frac{card(CH_j \cup CH_k)}{CH_{total,j}},$$

where

$CH_{total,j}$ represents the total quantity of subchannels in the correlation range of the beam j in the CR window [$x - a, x + b$].

Optionally, a CBR of the beam j is a channel busy ratio in the correlation range of the beam j within a period of time, and is determined by a ratio of a quantity of subchannels that exceed the RSSI threshold in subchannels in the correlation range of the beam j within the measurement time [$x - a, x - 1$] to a total quantity of measured subchannels.

Alternatively, a possible beam CBR is defined as a channel busy ratio in the correlation range of the beam j within a period of time, and is obtained by using a ratio of a quantity of subchannels that exceed the RSSI threshold in subchannels in the correlation range of the beam j within the measurement time [$x - a, x - 1$] of the UE to a total quantity of measured subchannels in the correlation range of the beam j.

S502: The terminal device #A determines a first beam from the N beams based on the channel busy ratio and the channel occupancy ratio of each beam.

Optionally, the terminal device #A determines the first beam from the N beams based on the channel occupancy ratio and/or the channel busy ratio of each beam.

In a possible manner, the first beam meets a first condition. The first condition may be:

$$\sum\nolimits_{i \geq k} CR_n(i) \leq CR_{\text{Limit},n}(k) \qquad (1)$$

Herein, n=1, ..., N, $CR_n(i)$ is a channel occupancy ratio of the beam j for transmitting information on a PSSCH of a priority i within the first time period, $CR_{\text{Limit},n}(k)$ is a channel occupancy ratio threshold of the beam j, and the channel occupancy ratio threshold is associated with a priority k and a channel busy ratio. For a CR calculation manner, refer to the related descriptions in S501. Details are not described herein again. The first condition may be a preset condition.

It may be understood that, when a CR of a beam does not meet Formula (1), the beam cannot be used for information transmission.

In another possible manner, when beams in the correlation range of the beam j are uniformly calculated during CR or CBR calculation, the first condition may be:

$$\sum\nolimits_{i \geq k} CR_{j}(i) + \sum\nolimits_{i \geq k} CR_{m}(i) \leq CR_{Limit,j}(k) \qquad (2)$$

Herein, j=1, ..., N, $CR_{j}(i)$ is a channel occupancy ratio of the beam j for transmitting information on a PSSCH of a priority i within the first time period, $CR_{m}(i)$ is a CR of a beam in the correlation range of the beam j, and $CR_{Limit,j}(k)$ is a CR constraint of the beam j, and is associated with a priority k and a channel busy ratio.

It may be understood that, when a CR of a beam does not meet Formula (2), the beam cannot be used for information transmission.

In other words, the first beam determined from the N beams meets Formula (1) or Formula (2). In other words, Formula (1) or Formula (2) may be used as a constraint for selecting the first beam, and only a beam that meets Formula (1) or Formula (2) can be used as a candidate of the first beam.

For example, the terminal device #A determines S beams from the N beams based on the channel busy ratios and/or the channel occupancy ratios of the N beams, where S is a positive integer less than or equal to N, and the S beams meet the first condition; and the terminal device #A determines the first beam from the S beams based on the channel busy ratio and/or the channel occupancy ratio of each beam.

When the S beams meet the first condition, a manner of determining the first beam from the S beams may be as follows:

Manner A: Select a beam with a highest RSRP.

It should be understood that the beam with a highest RSRP corresponds to an optimal channel condition, so that high-quality and high-rate transmission can be implemented. Using the beam for information transmission can further improve communication quality.

For another example, the terminal device #A determines L beams from the N beams based on the channel busy ratios and/or the channel occupancy ratios of the N beams, where L is a positive integer less than or equal to N, and the L beams meet the first condition; and the terminal device #A determines the first beam from the L beams based on the channel busy ratio and/or the channel occupancy ratio of each beam.

When the L beams meet the first condition, a manner of determining the first beam from the L beams may be as follows:

Manner B: Select a beam with lowest $\Sigma_{i \geq k} CR_n(i)$.

It should be understood that the lowest $\Sigma_{i \geq k} CR_n(i)$ means a largest quantity of idle resources of the beam, so that more resources can be used for information transmission, and more information can be transmitted, thereby reducing or balancing a channel congestion degree, and further improving communication reliability.

It should be understood that, in this application, an RSRP is used as an example for description, but this is not limited thereto. For example, the RSRP in this application may alternatively be replaced with RSRQ, an RSSI, or the like.

The foregoing describes the manner of determining the first beam from the N beams. The following briefly describes a manner of determining the N beams.

In a beam matching or beam sweeping process, a candidate beam set may be determined based on reference signal strength. As shown in FIG. 8, a UE-B sends an SSB by using a beam A, and a UE-A separately uses a beam 1, a beam 2, a beam 3, and the like to perform reception measurement. If an RSRP obtained by measuring, by using each of the beam 1, the beam 2, and the beam 3, a reference signal sent by the UE-B by using the beam A is greater than a threshold, the beam 1, the beam 2, and the beam 3 each may be used as a candidate beam for data transmission with the beam A of the UE-B.

In other words, the N beams may be determined based on reference signal received strength. For example, the N beams are determined from M beams determined based on RSRPs respectively corresponding to the M beams, where RSRPs respectively corresponding to the N beams are greater than or equal to a third threshold. The third threshold is an RSRP threshold. It should be understood that the third threshold may be predefined, or may be configured. This is not limited in embodiments of this application.

It should be further understood that the threshold, the threshold, or the like in this application may be configured by a network or preconfigured. For example, the threshold or the threshold is indicated by control information sent by a gNB or an eNB to a terminal device by using RRC signaling. For another example, preconfigured threshold configuration information is control information recorded in hardware and/or software of the terminal device. This is not limited in embodiments of this application.

To completely and clearly understand the manner of determining the first beam, the following further provides an example of a procedure of determining the first beam.

(1) Determine the N beams from the M beams.

For example, the UE-B sends the SSB by using the beam A, and the UE-A separately uses the beam 1, the beam 2, the beam 3, and the like to perform reception measurement. If the RSRP obtained by measuring, by using each of the beam 1, the beam 2, and the beam 3, the reference signal sent by the UE-B by using the beam A is greater than the threshold, the beam 1, the beam 2, and the beam 3 each may be used as the candidate beam for data transmission with the beam A of the UE-B.

(2) Select, from the beam 1, the beam 2, and the beam 3, a beam that meets the first condition.

For example, a CR and a CBR of each beam is separately measured, to obtain $CR_n(i)$ and $CR_{Limit,n}(k)$ of each beam. For the measurement manner, refer to the descriptions in S501. Details are not described herein again. If a measurement result of the beam 2 is greater than a threshold $CR_{Limit,2}$, according to a channel congestion control rule, the UE-A cannot perform sending by using the beam 2. If a measurement result of the beam 1 is less than a threshold $CR_{Limit,1}$, and a measurement result of the beam 3 is less than a threshold $CR_{Limit,3}$, the UE-A may select the beam 1 or the beam 3 for sending, to increase a transmission opportunity and meet service requirements of reliability and a delay.

In other words, the beam 2 and the beam 3 are selected from the beam 1, the beam 2, and the beam 3 as candidates of the first beam.

(3) Select the first beam from the beam 2 and the beam 3.

In a possible manner, the first beam is determined based on RSRPs of the beams. For example, if the RSRP of the beam 2 is greater than that of the beam 3, the beam 2 is selected as the first beam.

In another possible manner, the first beam is determined based on $\Sigma_{i \geq k} CR_n(i)$ of the beams. For example, if $\Sigma_{i \geq k} CR_n(i)$ of the beam 2 is greater than that of the beam 3, the beam 3 is selected as the first beam.

It should be understood that the manner of selecting the first beam in this embodiment of this application is not limited to the foregoing examples, and a manner such as a condition or a parameter used for selecting a beam in this embodiment of this application should fall within the protection scope of this application.

For example, a beam may be first selected based on an RSRP. For example, after RSRPs of a plurality of beams are measured, a beam with a largest RSRP is selected. Further, it is determined whether the beam meets Formula (1) or Formula (2). If yes, the beam is determined as the first beam. If not, a beam with a second highest RSRP is selected, and whether the beam meets Formula (1) or Formula (2) is further determined until a beam that meets Formula (1) or Formula (2) is found.

S503: The terminal device #A sends sidelink information by using the first beam.

For example, the terminal device #A may send the sidelink information to the terminal device #B by using the first beam. Alternatively, the terminal device #A may send the sidelink information to a network device by using the first beam. A communication scenario in which the terminal device sends the sidelink information is not limited in this application.

Optionally, the sidelink information includes first sidelink information and second sidelink information.

When the first sidelink information and the second sidelink information are sent by using the first beam, and the first beam does not meet the first condition, the first sidelink information may be sent by using the first beam, so that the first beam meets the first condition; and the second sidelink information is sent by using another beam, where the beam meets the first condition, and the beam also belongs to the N beams.

In other words, when the first beam does not meet the first condition during sending of a plurality of pieces of information, another beam may be switched to for information transmission, to meet a communication requirement and ensure communication quality.

For example, as shown in FIG. 9, if the measurement result of the beam 3 in the channel measurement results is greater than the threshold $CR_{Limit,3}$, according to the channel congestion control rule, the beam 3 cannot be used for sending. The measurement result of the beam 2 is less than the threshold $CR_{Limit,2}$, but only a limited quantity of times of transmission can be performed. For example, when the beam 2 is used for transmission once (one TB), $\Sigma_{i \geq k} CR_j(i)$ of the beam 2 does not exceed the threshold, but when the beam 2 is used for transmission twice (a TB and retransmission of the TB), $\Sigma_{i \geq k} CR_j(i)$ of the beam 2 exceeds the threshold. Therefore, although the measurement result of the beam 2 is less than the threshold $CR_{Limit,2}$, the beam 2 can be used to perform transmission only for a limited quantity of times. In this case, the measurement result of the beam 1 is less than the threshold $CR_{Limit,1}$, and the beam 1 may be selected for sending. In other words, in the measurement results shown in FIG. 9, the beam 2 is first selected for transmission because the RSRP measurement result of the beam 2 is the highest. When the beam 2 cannot be used for transmission due to congestion control, the beam 1 may be used to continue transmission, to increase a transmission opportunity and meet service requirements of reliability and a delay.

In this example, the first information is initial transmission information, and the second information is retransmission information. It should be understood that this is merely used as an example of the first information and the second information, and is not a limitation.

In this embodiment, a beam-based CBR measurement method is provided, and a CR is determined by using a beam as a unit. Based on a configured CBR threshold, another UE-assisted CBR measurement is supported, to implement resource congestion control of a beam. When a beam channel is congested, different TBs are sent (retransmitted or newly transmitted) by using an available beam set, so that service requirements that meet reliability and delay requirements can be further met when agreed CBR and CR constraints are met.

Embodiments described in this specification may be independent solutions, or may be combined based on internal logic. All of these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

Division into the modules in embodiments of this application is an example, and is merely logical function division. During actual implementation, there may be another division manner. In addition, functional modules in embodiments of this application may be integrated into one processor, or may exist alone physically, or two or more modules may be integrated into one module. The integrated module may be implemented in a form of hardware, or may be implemented in a form of a software functional module.

Communication apparatuses provided in embodiments of this application are described below in detail with reference to FIG. 10 and FIG. 11. It should be understood that descriptions of apparatus embodiments correspond to the descriptions of the method embodiments. Therefore, for content that is not described in detail, refer to the method embodiments. For brevity, details are not described herein again.

Same as the foregoing concept, as shown in FIG. 10, an embodiment of this application further provides an apparatus 1000, configured to implement functions of the session management function network element in the foregoing methods. For example, the apparatus may be a software module or a chip system. In this embodiment of this application, the chip system may include a chip, or may include a chip and another discrete component. The apparatus 1000 may include a processing unit 1010 and a communication unit 1020.

In this embodiment of this application, the communication unit may also be referred to as a transceiver unit, and may include a sending unit and/or a receiving unit, which are respectively configured to perform the sending and receiving steps of the terminal device in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a device that is in the communication unit 1020 and that is configured to implement a receiving function may be considered as a receiving unit, and a device that is in the communication unit 1020 and that is configured to implement a sending function may be considered as a sending unit. In other words, the communication unit 1020 includes a receiving unit and a sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 1000 performs functions of the terminal device #A in the procedure shown in any one of FIG. 5 to FIG. 9 in the foregoing embodiments:

the communication unit may be configured to send information and a reference signal; and
the processing unit may be configured to determine a channel occupancy ratio and a channel busy ratio of a beam, determine a first beam, and the like.

When the communication apparatus 1000 performs functions of the terminal device #B in the procedure shown in any one of FIG. 5 to FIG. 9 in the foregoing embodiments:

the communication unit may be configured to receive sidelink information and a reference signal; and
the processing unit may be configured to measure an RSRP of a beam.

The foregoing is merely an example. The processing unit 1010 and the communication unit 1020 may further perform other functions. For more detailed descriptions, refer to related descriptions in the method embodiments shown in FIG. 5 to FIG. 9 or other method embodiments. Details are not described herein again.

FIG. 11 shows an apparatus 1100 according to an embodiment of this application. The apparatus shown in FIG. 11 may be an implementation of a hardware circuit of the apparatus shown in FIG. 10. The communication apparatus is applicable to the foregoing flowcharts, and performs functions of the terminal device or the network device in the foregoing method embodiments. For ease of description, FIG. 11 merely shows main components of the communication apparatus.

The communication apparatus 1100 may be a terminal device, and can implement functions of the terminal device #A or the terminal device #B in the methods provided in embodiments of this application. Alternatively, the communication apparatus 1100 may be an apparatus that can support the first terminal apparatus or the second terminal apparatus in implementing corresponding functions in the methods provided in embodiments of this application. The communication apparatus 1100 may be a chip system. In this embodiment of this application, the chip system may include a chip, or may include a chip and another discrete component. For specific functions, refer to the descriptions of the foregoing method embodiments.

The communication apparatus 1100 includes one or more processors 1110, configured to implement or support the communication apparatus 1100 in implementing the functions of the terminal device #A or the terminal device #B in the methods provided in embodiments of this application. For details, refer to the detailed descriptions in the method examples. Details are not described herein again. The processor 1110 may also be referred to as a processing unit or a processing module, and may implement a specific control function. The processor 1110 may be a general-purpose processor, a special-purpose processor, or the like. For example, the processor includes a central processing unit, an application processor, a modem processor, a graphics processor, an image signal processor, a digital signal processor, a video codec processor, a controller, a memory, a neural network processor, and/or the like. The central processing unit may be configured to control the communication apparatus 1100, execute a software program, and/or process data.

Different processors may be independent components, or may be integrated into one or more processors, for example, integrated into one or more application-specific integrated circuits. It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 1100 includes one or more memories 1120, configured to store instructions 1140. The instructions may be run on the processor 1110, to enable the communication apparatus 1100 to perform the methods described in the foregoing method embodiments. The memory 1120 is coupled to the processor 1110. The coupling in this embodiment of this application may be an indirect coupling or a communication connection between apparatuses, units, or modules in an electrical form, a mechanical form, or another form, and is used for information exchange between the apparatuses, the units, or the modules. The processor 1110 may cooperate with the memory 1120. At least one of the at least one memory may be included in the processor. It should be noted that the memory 1120 is not necessary, and therefore is shown by using dashed lines in FIG. 11.

Optionally, the memory 1120 may further store data. The processor and the memory may be independently disposed, or may be integrated together. In this embodiment of this application, the memory 1120 may be a non-volatile memory, such as a hard disk drive (hard disk drive, HDD) or a solid-state drive (solid-state drive, SSD), or may be a volatile memory (volatile memory), such as a random access memory (random access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

Optionally, the communication apparatus 1100 may include instructions 1130 (which may also be referred to as code or a program sometimes), and the instructions 1130 may be run on the processor, to enable the communication apparatus 1100 to perform the methods described in the foregoing embodiments. The processor 1110 may store data.

Optionally, the communication apparatus 1100 may further include a transceiver 1150 and an antenna 1106. The transceiver 1150 may be referred to as a transceiver unit, a transceiver module, a transceiver device, a transceiver circuit, a transceiver machine, an input/output interface, or the like, and is configured to implement a transceiver function of the communication apparatus 1100 through the antenna 1106.

The processor 1110 and the transceiver 1150 described in this application may be implemented in an integrated circuit (integrated circuit, IC), an analog IC, a radio frequency integrated circuit (radio frequency identification, RFID), a mixed signal IC, an ASIC, a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 1100 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1100 may include more or fewer components, or some components are integrated, or some components are split. The components may be implemented by hardware, software, or a combination of software and hardware.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may alternatively be stored in a computer-readable memory that can instruct a computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. This application is also intended to cover these modifications and variations provided that they fall within the scope defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A beam measurement method, comprising:

    determining a channel occupancy ratio and a channel busy ratio of each of N beams, wherein N is a positive integer greater than or equal to 1;
    determining a first beam from the N beams based on the channel occupancy ratio and the channel busy ratio of each beam; and
    sending first sidelink information by using the first beam.

2. The method according to claim 1, wherein

    the channel occupancy ratio meets the following relationship:

$$CR_{\mathrm{j}} = \frac{CH_j}{CH_{total,j}},$$

    wherein
    $j=1, ..., N$, $CR_{\mathrm{j}}$ represents a channel occupancy ratio of a beam j within a first time period, $CH_{total,j}$ represents a total quantity of subchannels of the beam j within the first time period, and $CH_j$ represents a sum of a quantity of subchannels that have been transmitted and a quantity of subchannels that are to be transmitted in the beam j within the first time period.

3. The method according to claim 1 or 2, wherein

    the channel busy ratio meets the following relationship:

$$\mathrm{CBR}_j = \frac{Q}{\mathrm{CH}_{\mathrm{total}}},$$

    wherein
    $j=1, ..., N$, $CBR_j$ represents a channel busy ratio of the beam j within a second time period, Q represents a quantity of subchannels greater than or equal to a received signal strength indicator RSSI threshold in the beam j within the second time period, and $CH_{total}$ represents a total quantity of subchannels or a total quantity of measured subchannels of the beam j within the second time period.

4. The method according to any one of claims 1 to 3, wherein determining the first beam from the N beams based on the channel occupancy ratio and the channel busy ratio comprises:

determining the first beam from the N beams based on a first condition, wherein the first condition is:

$$\sum_{i \geq k} CR_j(i) \leq CR_{\text{Limit},j}(k),$$

wherein
j=1, ..., N, $CR_j(i)$ is a channel occupancy ratio of the beam j for transmitting information on a physical sidelink shared channel PSSCH of a priority i within the first time period, $CR_{\text{Limit},j}(k)$ is a channel occupancy ratio threshold of the beam j, the channel occupancy ratio threshold is associated with a priority k and a channel busy ratio, and the first beam meets the first condition.

5. The method according to claim 4, wherein determining the first beam from the N beams based on the channel occupancy ratio and the channel busy ratio of each beam comprises:

determining S beams from the N beams based on the channel occupancy ratio and the channel busy ratio of each beam, wherein S is a positive integer less than or equal to N, and the S beams meet the first condition; and determining the first beam from the S beams based on a reference signal received power RSRP of each beam, wherein the first beam is a beam with a largest RSRP in the S beams.

6. The method according to claim 4, wherein determining the first beam from the N beams based on the channel occupancy ratio and the channel busy ratio of each beam comprises:

determining L beams from the N beams based on the channel occupancy ratio and the channel busy ratio of each beam, wherein L is a positive integer less than or equal to N, and the L beams meet the first condition; and determining the first beam from the L beams based on the channel occupancy ratio and the channel busy ratio of each beam, wherein the first beam is a beam with smallest $\Sigma_{i \geq k} CR_j(i)$ in the L beams.

7. The method according to any one of claims 1 to 6, wherein before sending the first sidelink information by using the first beam, the method further comprises:

determining to-be-sent information, wherein the to-be-sent information comprises the first sidelink information and second sidelink information; and when the first beam is used to send the first sidelink information and the second sidelink information, and the first beam does not meet the first condition, determining a second beam, wherein the second beam meets the first condition, and the second beam belongs to the N beams; and the method further comprises: sending the second sidelink information by using the second beam.

8. The method according to claim 7, wherein the first sidelink information is initial transmission information, and the second sidelink information is retransmission information.

9. The method according to any one of claims 1 to 8, wherein determining the channel occupancy ratio and the channel busy ratio of each of the N beams comprises:

receiving a first parameter, wherein the first parameter is from a second terminal device, the first parameter indicates a resource occupation status of a third beam, the first parameter is obtained by the second terminal device through measurement by using the third beam, the second terminal device is a receive end of a first terminal device, and the third beam is a receive beam corresponding to a fourth beam; and determining a channel occupancy ratio and a channel busy ratio of the fourth beam based on the first parameter.

10. The method according to claim 9, wherein determining the channel occupancy ratio and the channel busy ratio of the fourth beam based on the first parameter comprises:
determining the channel occupancy ratio and the channel busy ratio of the fourth beam based on the first parameter and a second parameter, wherein the second parameter indicates a resource occupation status of the fourth beam, and the second parameter is obtained by the first terminal device through measurement by using the fourth beam.

11. The method according to any one of claims 1 to 10, wherein determining the channel occupancy ratio and the channel busy ratio of each of the N beams comprises:
when at least two of the N beams meet at least one of the following, the at least two beams have a same channel occupancy ratio and a same channel busy ratio:

RSRPs respectively corresponding to the at least two beams are greater than or equal to a first threshold; or
the at least two beams belong to a same antenna panel; or
an included angle between maximum radiation directions of main lobes of the at least two beams is less than or equal to a second threshold.

12. The method according to any one of claims 1 to 11, wherein the method further comprises:
determining the N beams based on RSRPs respectively corresponding to M beams, wherein RSRPs respectively corresponding to the N beams are greater than or equal to a third threshold, and M is a positive integer greater than or equal to N.

13. A communication apparatus, wherein the communication apparatus comprises a processing unit and a transceiver unit, wherein the processing unit is configured to determine a channel occupancy ratio and a channel busy ratio of each of N beams, wherein N is a positive integer greater than or equal to 1; the processing unit is further configured to determine a first beam from the N beams based on the channel occupancy ratio and the channel busy ratio of each beam; and the transceiver unit is further configured to send first sidelink information by using the first beam.

14. The apparatus according to claim 13, wherein the channel occupancy ratio meets the following relationship:

$$CR_j = \frac{CH_j}{CH_{total,j}},$$

wherein
j=1, ..., N, $CR_j$ represents a channel occupancy ratio of a beam j within a first time period, $CH_{total,j}$ represents a total quantity of subchannels of the beam j within the first time period, and $CH_j$ represents a sum of a quantity of subchannels that have been transmitted and a quantity of subchannels that are to be transmitted in the beam j within the first time period.

15. The apparatus according to claim 13 or 14, wherein the channel busy ratio meets the following relationship:

$$CBR_j = \frac{Q}{CH_{total}},$$

wherein
j=1, ..., N, $CBR_j$ represents a channel busy ratio of the beam j within a second time period, Q represents a quantity of subchannels greater than or equal to an RSSI threshold in the beam j within the second time period, and $CH_{total}$ represents a total quantity of subchannels or a total quantity of measured subchannels of the beam j within the second time period.

16. The apparatus according to any one of claims 13 to 15, wherein that the processing unit is configured to determine the first beam from the N beams based on the channel occupancy ratio and the channel busy ratio comprises:

the processing unit determines the first beam from the N beams based on a first condition, wherein the first condition is:

$$\sum_{i \geq k} CR_j(i) \leq CR_{Limit,j}(k),$$

wherein

j=1, ..., N, $CR_j(i)$ is a channel occupancy ratio of the beam j for transmitting information on a PSSCH of a priority i within the first time period, $CR_{Limit,j}(k)$ is a channel occupancy ratio threshold of the beam j, the channel occupancy ratio threshold is associated with a priority k and a channel busy ratio, and the first beam meets the first condition.

17. The apparatus according to claim 16, wherein that the processing unit determines the first beam from the N beams based on the channel occupancy ratio and the channel busy ratio of each beam comprises:

the processing unit is configured to determine S beams from the N beams based on the channel occupancy ratio and the channel busy ratio of each beam, wherein S is a positive integer less than or equal to N, and the S beams meet the first condition; and

the processing unit is further configured to determine the first beam from the S beams based on a reference signal received power RSRP of each beam, wherein the first beam is a beam with a largest RSRP in the S beams.

18. The apparatus according to claim 16, wherein that the processing unit is configured to determine the first beam from the N beams based on the channel occupancy ratio and the channel busy ratio of each beam comprises:

the processing unit is configured to determine L beams from the N beams based on the channel occupancy ratio and the channel busy ratio of each beam, wherein L is a positive integer less than or equal to N, and the L beams meet the first condition; and

the processing unit is further configured to determine the first beam from the L beams based on the channel occupancy ratio and the channel busy ratio of each beam, wherein the first beam is a beam with smallest $\Sigma_{i \geq k} CR_j(i)$ in the L beams.

19. The apparatus according to any one of claims 13 to 18, wherein before the transceiver unit is configured to send the first sidelink information by using the first beam, the processing unit is further configured to determine to-be-sent information, wherein the to-be-sent information comprises the first sidelink information and second sidelink information; and when the first beam is used to send the first sidelink information and the second sidelink information, and the first beam does not meet the first condition, the processing unit is configured to determine a second beam, wherein the second beam meets the first condition, and the second beam belongs to the N beams; and

the transceiver unit is further configured to send the second sidelink information by using the second beam.

20. The apparatus according to claim 19, wherein the first sidelink information is initial transmission information, and the second sidelink information is retransmission information.

21. The apparatus according to any one of claims 13 to 20, wherein that the processing unit is configured to determine the channel occupancy ratio and the channel busy ratio of each of the N beams comprises:

the transceiver unit is configured to receive a first parameter, wherein the first parameter is from a second terminal device, the first parameter indicates a resource occupation status of a third beam, the first parameter is obtained by the second terminal device through measurement by using the third beam, the second terminal device is a receive end of a first terminal device, and the third beam is a receive beam corresponding to a fourth beam; and

the processing unit is configured to determine a channel occupancy ratio and a channel busy ratio of the fourth beam based on the first parameter.

22. The apparatus according to claim 21, wherein that the processing unit is configured to determine the channel occupancy ratio and the channel busy ratio of the fourth beam based on the first parameter comprises:

the processing unit is configured to determine the channel occupancy ratio and the channel busy ratio of the fourth beam based on the first parameter and a second parameter, wherein the second parameter indicates a resource occupation status of the fourth beam, and the second parameter is obtained by the first terminal device through measurement by using the fourth beam.

23. The apparatus according to any one of claims 13 to 22, wherein when at least two of the N beams meet at least one of the following, the at least two beams have a same channel occupancy ratio and a same channel busy ratio:

RSRPs respectively corresponding to the at least two beams are greater than or equal to a first threshold; or

the at least two beams belong to a same antenna panel;

or
an included angle between maximum radiation directions of main lobes of the at least two beams is less than or equal to a second threshold.

24. The apparatus according to any one of claims 13 to 23, wherein the processing unit is further configured to determine the N beams based on RSRPs respectively corresponding to M beams, wherein RSRPs respectively corresponding to the N beams are greater than or equal to a third threshold, and M is a positive integer greater than or equal to N.

25. A communication system, comprising the communication apparatus according to any one of claims 13 to 24.

26. A communication apparatus, comprising:
a processor, configured to execute computer instructions stored in a memory, to enable the apparatus to perform the method according to any one of claims 1 to 12.

27. The apparatus according to claim 26, wherein the apparatus further comprises the memory.

28. The apparatus according to claim 26 or 27, wherein the apparatus further comprises a communication interface, and the communication interface is coupled to the processor; and
the communication interface is configured to input and/or output information.

29. The apparatus according to any one of claims 26 to 28, wherein the apparatus is a chip.

30. A computer-readable storage medium, wherein the computer-readable storage medium is configured to store a computer program, and when the computer program is run on a computer, the computer is enabled to perform the method according to any one of claims 1 to 12.

FIG. 1

FIG. 2

Subchannel

Slot

AGC

PSCCH

FIG. 3

Trigger resource selection

UE2 (R1)

UE2

UE3

UE2 (R2)

UE3 (R1)

UE3 (P)

UE3 (R1)

$n-T_0$    Listening window    $n-T_{proc,0}$   n   $n+T_1$    Resource selection window    $n+T_2$

UE1

FIG. 4

S501: A terminal device #A determines a channel occupancy ratio and a channel busy ratio of each of N beams

S502: The terminal device #A determines a first beam from the N beams based on the channel busy ratio and the channel occupancy ratio of each beam

S503: The terminal device #A sends sidelink information by using the first beam

FIG. 5

(a)

(b)

(c)

FIG. 6

FIG. 7

FIG. 8

FIG. 9

Apparatus 1000

Processing unit
1010

Communication unit
1020

FIG. 10

1100

1110

Processor

Instructions

1130

1140

1120

Memory

Instructions

Transceiver

Antenna

1150

1160

FIG. 11

## INTERNATIONAL SEARCH REPORT

| International application No. |
| --- |
| **PCT/CN2023/139784** |

### A. CLASSIFICATION OF SUBJECT MATTER

H04B 17/309(2015.01)i

According to International Patent Classification (IPC) or to both national classification and IPC

### B. FIELDS SEARCHED

Minimum documentation searched (classification system followed by classification symbols)

IPC: H04B

Documentation searched other than minimum documentation to the extent that such documents are included in the fields searched

Electronic data base consulted during the international search (name of data base and, where practicable, search terms used)

CNTXT, ENTXT, DWPI: 侧链路, 波束, 确定, 选择, 测量, 信道占用率, 信道繁忙率, RSRP, sidelink, beam, select, determine, measurement, CBR, CR

### C. DOCUMENTS CONSIDERED TO BE RELEVANT

| Category* | Citation of document, with indication, where appropriate, of the relevant passages | Relevant to claim No. |
| --- | --- | --- |
| Y | CN 110291838 A (LG ELECTRONICS INC.) 27 September 2019 (2019-09-27) description, paragraphs 0003-0195, and figures 1-15 | 1-30 |
| Y | US 2020351859 A1 (COMCAST CABLE COMMUNICATIONS, LLC) 05 November 2020 (2020-11-05) description, paragraph 0379 | 1-30 |
| A | WO 2022203756 A1 (QUALCOMM INC.) 29 September 2022 (2022-09-29) entire document | 1-30 |
| A | US 2022247457 A1 (QUALCOMM INC.) 04 August 2022 (2022-08-04) entire document | 1-30 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 March 2024** | **07 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/139784**

| Patent document cited in search report | | | Publication date (day/month/year) | Patent family member(s) | | | Publication date (day/month/year) |
|---|---|---|---|---|---|---|---|
| CN | 110291838 | A | 27 September 2019 | US | 2022095400 | A1 | 24 March 2022 |
| | | | | WO | 2018147699 | A1 | 16 August 2018 |
| | | | | JP | 2020506637 | A | 27 February 2020 |
| | | | | KR | 20190108121 | A | 23 September 2019 |
| | | | | US | 2020015298 | A1 | 09 January 2020 |
| | | | | EP | 3582578 | A1 | 18 December 2019 |
| | | | | EP | 4021137 | A1 | 29 June 2022 |
| US | 2020351859 | A1 | 05 November 2020 | CA | 3080158 | A1 | 02 November 2020 |
| | | | | EP | 3735075 | A1 | 04 November 2020 |
| WO | 2022203756 | A1 | 29 September 2022 | US | 2022312397 | A1 | 29 September 2022 |
| | | | | CN | 116941313 | A | 24 October 2023 |
| | | | | EP | 4316153 | A1 | 07 February 2024 |
| US | 2022247457 | A1 | 04 August 2022 | WO | 2022170295 | A1 | 11 August 2022 |
| | | | | EP | 4289077 | A1 | 13 December 2023 |
| | | | | KR | 20230137332 | A | 04 October 2023 |
| | | | | BR | 112023014995 | A2 | 12 December 2023 |
| | | | | CN | 116762285 | A | 15 September 2023 |
| | | | | TW | 202234932 | A | 01 September 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211722785